(19) Europäisches Patentamt
European Patent Office
Office européen des brevets

(11) EP 3 184 652 A1

(12) EUROPEAN PATENT APPLICATION
published in accordance with Art. 153(4) EPC

(43) Date of publication:
28.06.2017 Bulletin 2017/26

(51) Int Cl.:
C21C 7/00 (2006.01)     C21C 7/06 (2006.01)

(21) Application number: 15834339.2

(22) Date of filing: 17.08.2015

(86) International application number:
PCT/JP2015/073013

(87) International publication number:
WO 2016/027765 (25.02.2016 Gazette 2016/08)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 21.08.2014 JP 2014168472

(71) Applicant: Kabushiki Kaisha Kobe Seiko Sho (Kobe Steel, Ltd.)
Kobe-shi, Hyogo 651-8585 (JP)

(72) Inventors:
• KIMURA, Sei
Kakogawa-shi
Hyogo 651-0137 (JP)
• SHIMAMOTO, Masaki
Kobe-shi
Hyogo 651-2271 (JP)
• OWAKI, Akihiro
Kobe-shi
Hyogo 657-0863 (JP)
• SHINDO, Yosuke
Kobe-shi
Hyogo 657-0863 (JP)
• SUGIMURA, Tomoko
Kobe-shi
Hyogo 651-2271 (JP)

(74) Representative: Müller-Boré & Partner
Patentanwälte PartG mbB
Friedenheimer Brücke 21
80639 München (DE)

(54) **METHOD FOR CONTROLLING TI CONCENTRATION IN STEEL, AND METHOD FOR PRODUCING SILICON-DEOXIDIZED STEEL**

(57) Disclosed is a method for controlling a Ti concentration in a steel when manufacturing a silicon-deoxidized steel comprising 0.1 to 3% by mass of Si and 0.0001 to 0.005% by mass of Al by ladle refining of a molten steel, the method including the step of:

adding an oxide including $TiO_2$ to a slag in a ladle during the ladle refining, wherein the slag produced at end of the ladle refining satisfies formulas (1) to (7) below:

$$0.5 \leq CaO/SiO_2 \leq 1.8 \quad (1)$$

$$4\% \text{ by mass} \leq Al_2O_3 \leq 20\% \text{ by mass} \quad (2)$$

$$MgO \leq 15\% \text{ by mass} \quad (3)$$

$$1.5\% \text{ by mass} \leq TiO_2 \leq 10\% \text{ by mass} \quad (4)$$

$$CaO + SiO_2 + Al_2O_3 + MgO + TiO_2 \geq 90\% \text{ by mass} \quad (5)$$

EP 3 184 652 A1

$$0.4 \leq TiO_2/MnO \leq 5 \qquad (6)$$

$$1 \leq TiO_2/T.Fe \leq 10 \qquad (7)$$

where a compound represented by a chemical formula represents the content of the compound in percent by mass; and T.Fe represents the total concentration, in mass ratio, of Fe contained in Fe oxides in the slag.

## Fig.1

**Description**

Technical Field

The present invention relates to a method for controlling a Ti concentration in a steel when manufacturing the steel, such as a silicon-deoxidized steel, and a method for producing a silicon-deoxidized steel using the controlling method.

Background Art

Conventionally, in ladle refining, a method for deoxidizing a steel is known to add aluminum (Al) or silicon (Si) to a molten steel tapped from a converter or an electric furnace. In such deoxidization treatment of steel, techniques have been developed to minimize inclusions in the steel after deoxidization and to optimize the components of the steel (see Patent Documents 1 to 6, etc.)

For instance, Patent Document 1 discloses a technique that sets a slag composition to satisfy the relationships below: $CaO + Al_2O_3 \geq 80\%$, $SiO_2 \leq 3\%$, $CaO/Al_2O_3 = 1.5$ to $4$, for the purpose of manufacturing a steel with fewer Al clusters. Furthermore, Patent Document 2 discloses a technique that restricts an Al concentration in a steel to 0.001 to 0.002% and specifies a refractory material to be processed into a ladle and a slag composition for the purpose of manufacturing a saw wire steel.

Patent Document 3 discloses a technique that restricts an Al concentration in a steel to 0.005% or less for the purpose of exhibiting good durability against damage due to rolling-contact fatigue and ensuring excellent rolling-contact fatigue life. Patent Document 4 discloses a technique that restricts an Al concentration in a steel to 0.003% or less for the purpose of providing a high cleanliness Si-deoxidized steel that can achieve stable extension and refining of oxide-based inclusions in hot-rolling and cold-rolling processes.

Patent Document 5 discloses a technique that restricts an Al concentration to 0.003% or less, a Ti concentration to 0.0010% or less, a Zr concentration to 0.0001% or less, and a Rare-Earth Metal (REM) concentration to 0.0005% or less in a steel for the purpose of manufacturing a Si-deoxidized steel that can decrease the whole oxygen concentration in the Si-deoxidized steel to 15 ppm or less. Patent Document 6 discloses a technique that restricts an Al concentration to 0.003% or less, a Ti concentration to 0.003% or less, and a Zr concentration to 0.0010% or less in a steel for the purpose of providing a Si-deoxidized steel with excellent fatigue strength.

Conventional Art Document

Patent Document

| | |
|---|---|
| Patent Document 1: | JP 2014-037598 A |
| Patent Document 2: | JP 2013-224480 A |
| Patent Document 3: | JP 2010-7092 A |
| Patent Document 4: | JP 2010-202905 A |
| Patent Document 5: | JP 2002-194497 A |
| Patent Document 6: | JP 2002-167647 A |

Disclosure of the Invention

Problems to Be Solved by the Invention

Based on a close investigation of Patent Documents 1 to 6 mentioned above, there is no document that specifically describes the adjustment of a $TiO_2$ concentration in a slag, while some documents describe the techniques regarding the Ti concentration in the steel. For this reason, in practice, even the use of these techniques cannot precisely control a small Ti concentration contained in a steel. Thus, variations in the small Ti concentration in the steel are difficult to suppress.

Accordingly, the present invention has been made in view of the foregoing points, and it is an object of the present invention to provide a method for controlling a Ti concentration in a steel that can suppress variations in the Ti concentration in the steel.

Means for Solving the Problems

The method for controlling a Ti concentration in a steel according to the present invention is a method for controlling a Ti concentration in a steel when manufacturing a silicon-deoxidized steel including 0.1 to 3% by mass of Si and 0.0001 to 0.005% by mass of Al by ladle refining of a molten steel, the method comprising the step of:

adding an oxide, including $TiO_2$, to a slag in a ladle during the ladle refining, wherein the slag produced at end of the ladle refining satisfies formulas (1) to (7) below:

$$0.5 \leq CaO/SiO_2 \leq 1.8 \qquad (1)$$

$$4\% \text{ by mass} \leq Al_2O_3 \leq 20\% \text{ by mass} \qquad (2)$$

$$MgO \leq 15\% \text{ by mass} \qquad (3)$$

$$1.5\% \text{ by mass} \leq TiO_2 \leq 10\% \text{ by mass} \qquad (4)$$

$$CaO + SiO_2 + Al_2O_3 + MgO + TiO_2 \geq 90\% \text{ by mass} \qquad (5)$$

$$0.4 \leq TiO_2/MnO \leq 5 \qquad (6)$$

$$1 \leq TiO_2/T.Fe \leq 10 \qquad (7)$$

where a compound represented by a chemical formula represents the content of the compound in percent by mass; and T. Fe represents the total concentration, in mass ratio, of Fe contained in Fe oxides in the slag.

The method for manufacturing a silicon-deoxidized steel according to the present invention is a method for manufacturing a silicon-deoxidized steel including 0.1 to 3% by mass of Si and 0.0001 to 0.005% by mass of Al by ladle refining of a molten steel, wherein a Ti concentration in the steel is controlled by the method for controlling a Ti concentration in a steel according to the present invention.

Effects of the Invention

The present invention can suppress variations in the Ti concentration contained in the steel.

Brief Description of the Drawings

Fig. 1 shows [Ti] concentrations in molten irons in Example A and Comparative Example D.
Fig. 2 shows [Ti] concentrations in molten irons in Example B and Comparative Example E.
Fig. 3 shows [Ti] concentrations in molten irons in Example C and Comparative Example F.

Mode for Carrying Out the Invention

Embodiments of the present invention will be described below with reference to the accompanying drawings.
In a steelmaking process, after the end of refining a molten iron (molten steel) in a converter or an electric furnace, generally, the molten iron is poured into a ladle, and subjected to refining in the ladle (ladle refining). Oxygen used for decarburization or dephosphorization in the converter or electric furnace remains in the molten steel poured in the ladle. Thus, in the ladle refining or the like, for example, Al is added to the molten steel, thereby performing deoxidization to remove oxygen from the molten steel. In the deoxidization with Al, alumina or spinel generated in the molten steel by the addition of Al and the like is contained as non-metallic inclusions in the steel material in some cases. Taking this matter into consideration, there is a deoxidization method of a molten steel in which the amount of added Al is restricted as much as possible, and instead of that, Si which has less affinity for oxygen than Al is added to the molten steel. The present invention is directed to a process for deoxidizing a molten steel by adding at least Si to the molten steel.

In more detail, the present invention is directed to a method for manufacturing a silicon-deoxidized steel by ladle refining of a molten steel tapped from a converter or an electric furnace, the silicon-deoxidized steel including 0.1 to 3% (in percent by mass; the same shall apply hereinafter) of Si and 0.0001 to 0.005% of Al. The lower limit of Si concentration is 0.1%, while the upper limit of Si concentration is 3%. When the Si concentration exceeds 3%, that is, when the amount of Si added to the molten steel is large and the molten steel is strongly deoxidized, non-metallic inclusions containing silica as a main component would be included in the molten steel. Thus, the upper limit of Si concentration is set at 3%. Note that although the present invention is based on the assumption that after refining in the converter or electric furnace, ladle refining is carried out, this is not limited to the converter or electric furnace. Alternatively, the present invention may employ any type of refining furnace (steelmaking furnace) that can reduce a carbon concentration [C] in a molten steel to 2% or less before the ladle refining.

Regarding the ladle refining, the slag composition at the end of the ladle refining satisfies the following conditions: $CaO/SiO_2$ is 0.5 or more and 1.8 or less; $Al_2O_3$ is 4% or more and 20% or less; and MgO is 15% or less (excluding 0%). Note that a chemical formula, such as "CaO" and "$SiO_2$", mentioned in the formula using at least one of "/", "≤", and "+" in the present specification means a content, in mass ratio, of a compound represented by the chemical formula.

The slag composition will be described below in more detail.

When $CaO/SiO_2$ is less than 0.5, non-metallic inclusions that contain $SiO_2$ as a main component tend to be generated, which degrades the fatigue properties of a steel material. Thus, the lower limit of $CaO/SiO_2$ is set at 0.5. In contrast, when $CaO/SiO_2$ exceeds 1.8, refractory material applied to the inner side of the ladle is susceptible to erosion by the slag. In other words, the amount of eroded refractory material increases, leading to an increase in the amount of non-metallic inclusions in the steel that is caused by the erosion of the refractory material. Thus, the upper limit of $CaO/SiO_2$ is set at 1.8.

When the $Al_2O_3$ content is less than 4%, the $SiO_2$ content is relatively more than the $Al_2O_3$ content, making it more likely to generate non-metallic inclusions containing $SiO_2$ as a main component. Thus, the lower limit of $Al_2O_3$ content is set at 4%. On the other hand, when the $Al_2O_3$ content is more than 20%, non-metallic inclusions containing $Al_2O_3$ as a main component are more likely to be generated, degrading the fatigue strength of the steel. Thus, the upper limit of $Al_2O_3$ content is set at 20%.

MgO is sometimes trapped inevitably into the steel from refractory material applied to the inner side of the ladle. Alternatively, MgO is sometimes added to reduce the melting point or viscosity of a slag. Here, when the MgO content exceeds 15%, non-metallic inclusions containing MgO as a main component are generated to degrade the fatigue strength of the steel. Thus, the upper limit of MgO content is set at 15%.

In the present invention, when manufacturing the silicon-deoxidized steel, an oxide including $TiO_2$ is added in the ladle refining process, whereby the $TiO_2$ content is set at 1.5 to 10%. That is, $TiO_2$ is essentially contained in the slag. $TiO_2$ is not contained as an impurity of a flux (plowing agent), but contained in the slag intentionally.

Next, a detailed description will be given on the addition of $TiO_2$ to the slag.

The inventors have tried to control a Ti concentration in a molten steel during ladle refining when manufacturing a silicon-deoxidized steel, i.e., a Si-killed steel by adding sponge Ti, pure Ti, or an alloy iron containing Ti metal, such as FeTi, to the molten steel. Besides, a ratio of distribution of Ti between the slag and the molten iron during the ladle refining, i.e., Ti distribution = (Ti)/[Ti] has been determined: where (Ti) is a Ti concentration (% by mass) in the slag, and [Ti] is a Ti concentration (% by mass) in the molten steel.

As a result, when adding sponge Ti, pure Ti, or an alloy iron containing Ti directly to the molten steel, the Ti distribution was a high value ranging from approximately 200 to 20000. This shows that even the addition of the pure Ti, such as sponge Ti, or the alloy iron containing Ti metal, such as FeTi, to the molten iron causes most of them to be present as a Ti oxide in the slag, wasting expensive titanium.

When the slag contains an oxide ($FeO_x$, MnO, $SiO_2$, etc.) of an element having weaker oxidizing power, such as Fe, Mn, or Si, than Ti, the addition of Ti might reduce part of such an oxide. It is difficult to estimate the amount of Ti consumed for the reduction, consequently making it difficult to control the Ti concentration in the molten iron or the slag composition with high accuracy.

Accordingly, the inventors have found that $TiO_2$ should be added to a slag from an initial stage of the ladle refining, causing Ti to be distributed from the slag to the molten steel, so that the Ti concentration in the molten steel can be controlled with higher accuracy. Furthermore, this method has been found to be capable of suppressing the usage of expensive Ti metal or a Ti-containing alloy iron. In particular, when Ti in the molten iron is controlled to a minute

**EP 3 184 652 A1**

concentration of several ppms to several tens of ppms, the method of adding $TiO_2$ to the slag is found to be performed with higher control accuracy than a method of introducing Ti metal to a molten steel.

To surely distribute the dissolved Ti in the molten steel, the $TiO_2$ concentration in the slag needs to be 1.5% or more, and preferably 2% or more. On the other hand, when the $TiO_2$ concentration in the slag exceeds 10%, non-metallic inclusions containing nitride TiN as a main component tend to be generated. Thus, the limit of $TiO_2$ concentration is set at 10%.

Furthermore, in the present invention, with regard to the slag composition at the end of the ladle refining, the relationship among CaO, $SiO_2$, $Al_2O_3$, MgO, and $TiO_2$ satisfies the following formula: CaO + $SiO_2$ + $Al_2O_3$ + MgO + $TiO_2$ $\geq$ 90%. Examples of the balance contained in the slag, other than CaO, $SiO_2$, $Al_2O_3$, MgO, and $TiO_2$, which are inevitably trapped into the slag, include MnO, FeO, $Fe_3O_4$, $Fe_2O_3$, $P_2O$, $V_2O_5$, etc. To enhance the accuracy of Ti distribution, the concentration of impurities needs to be less than 10%. That is, CaO + $SiO_2$ + $Al_2O_3$ + MgO + $TiO_2$ $\geq$ 90%.

Among elements inevitably trapped into the slag, MgO and Fe oxides (T.Fe), such as FeO, $Fe_3O_4$, and $Fe_2O_3$, are components that increase variations in the Ti distribution ratio. For this reason, in the present invention, the upper and lower limits of MgO and T.Fe have been specified.

It may be possible that the total of both the MnO concentration and the T.Fe concentration is specified when intending to specify these MnO and T. Fe concentrations. However, for the silicon-deoxidized steel, the MnO and the T.Fe need to be separately from each other. That is, for an Al-killed steel, Al has a strong power for reducing the slag, and thus a difference between the MnO concentration and the Fe oxide concentration in the slag is small. For a silicon-deoxidized steel, the power for reducing the slag is weak, compared to Al, which is more likely to make a difference between the MnO concentration and Fe oxide concentration. Additionally, when the Mn concentration is high, the difference between the MnO concentration and the T.Fe concentration in the slag becomes more larger. Thus, the silicon-deoxidized steel in the present invention separately specifies the MnO component and the T.Fe component in the slag.

In detail, with regard to MnO, $TiO_2$/MnO needs to be set at 0.4 or more and 5 or less. With regard to T.Fe, $TiO_2$/T.Fe needs to be set at 1 or more and 10 or less. In this way, the relationships of $0.4 \leq TiO_2/MnO \leq 5$, and $1 \leq TiO_2/T.Fe \leq 10$ are satisfied, thereby making it possible to suppress variations in the Ti distribution ratio. Note that T.Fe represents the total concentration, in mass ratio, of Fe contained in Fe oxides in the slag.

As mentioned above, in the present invention, when manufacturing the silicon-deoxidized steel, the slag composition at the end of the ladle refining satisfies the following conditions: CaO/$SiO_2$ is 0.5 or more and 1.8 or less; $Al_2O_3$ is 4% or more and 20% or less; and MgO is 15% or less (excluding 0%). Further, the addition of the oxide containing $TiO_2$ sets a $TiO_2$ content in the slag at 1. 5 to 10% . The slag composition satisfies the following conditions: CaO + $SiO_2$ + $Al_2O_3$ + MgO + $TiO_2$ $\geq$ 90% by mass; $0.4 \leq TiO_2/MnO \leq 5$; and $1 \leq TiO_2/T.Fe \leq 10$.

The slag composition satisfies the above-mentioned conditions, so that the Ti concentration in the steel material can be set at 0.0005% to 0.01%. Note that with regard to the Ti concentration, the Ti concentration exceeding 0.01% can also be applied in principle, but in this case, a $TiO_2$ content in the slag needs to be more than 10%. In such a case, introducing Ti metal or an alloy containing Ti directly to a molten steel is sometimes more economical rather than the addition of $TiO_2$ to the slag. In addition, as mentioned above, when the $TiO_2$ content is set at more than 10%, non-metallic inclusions containing a nitride TiN as a main component tend to be generated. This is why the upper limit of a Ti concentration in the steel material is set at 0.01%.

On the other hand, Ti is trapped from impurities of an alloy iron containing Mn, Cr, Si, etc., other than Ti, a refractory material of a ladle, and a slag raw material other than $TiO_2$ in some cases. For this reason, the Ti concentration in the steel is sometimes in a range of approximately 0.0002 to 0.0004% without intentionally adding Ti or $TiO_2$. Thus, the lower limit of Ti concentration of the steel is 0.0005%.

Examples

Tables 1 and 2 collectively show Examples in which the control method of the Ti concentration in the steel according to the present invention was performed, as well as Comparative Examples in which a method different from that of the present invention was used for a process.

Note that "%" shown in the respective components of the "slag composition" in Tables 1 and 2 means % by mass.

[Table 1]

| | Sample No. | Amount of electrolytic iron used for melting (kg) | Amount of FeTi alloy added to molten iron (g) | Amount of TiO$_2$ added to slag (g) | Total amount of Ti added to molten iron and slag (g) | Slag composition | | | | | | | Total of components (1) to (5) (%) | CaO/SiO2 (-) | TiO2/MnO (-) | TiO2/T.Fe (-) | Molten iron composition after adjustment (mass%) | | | | | | Average and Standard variation of Ti | Ti distribution (Ti)/[Ti] (-) |
| | | | | | | CaO (1) (%) | MgO (2) (%) | SiO2 (3) (%) | Al2O3 (4) (%) | TiO2 (5) (%) | MnO (%) | T,Fe (%) | | | | | C | Si | Mn | Cr | Al | Ti | | |
|---|---|---|---|---|---|---|---|---|---|---|---|---|---|---|---|---|---|---|---|---|---|---|---|---|
| Example A | 1 | 2.0 | 0.00 | 0.80 | 0.48 | 31.9 | 6.1 | 45.8 | 5.5 | 1.8 | 2.9 | 1.4 | 91.1 | 0.70 | 0.62 | 1.29 | 0.55 | 1.43 | 0.77 | 0.22 | 0.0005 | 0.0008 | | 1349 |
| | 2 | 2.0 | 0.00 | 0.80 | 0.48 | 32.5 | 3.8 | 46.0 | 6.5 | 2.0 | 3.1 | 1.0 | 90.8 | 0.71 | 0.65 | 2.00 | 0.61 | 1.47 | 0.81 | 0.15 | 0.0006 | 0.0011 | Average 0.00107 | 1090 |
| | 3 | 2.0 | 0.00 | 0.80 | 0.48 | 33.0 | 4.1 | 45.1 | 5.9 | 2.2 | 2.8 | 1.2 | 90.3 | 0.73 | 0.79 | 1.83 | 0.65 | 1.52 | 0.92 | 0.23 | 0.0004 | 0.0012 | | 1099 |
| | 4 | 2.0 | 0.00 | 0.80 | 0.48 | 35.1 | 3.5 | 44.2 | 6.4 | 1.9 | 3.0 | 0.9 | 91.1 | 0.79 | 0.63 | 2.11 | 0.63 | 1.97 | 0.87 | 0.17 | 0.0007 | 0.0020 | | 570 |
| | 5 | 2.0 | 0.00 | 0.80 | 0.48 | 36.3 | 2.9 | 43.9 | 6.0 | 2.5 | 3.8 | 0.8 | 91.6 | 0.83 | 0.66 | 3.13 | 0.67 | 2.20 | 0.86 | 0.19 | 0.0006 | 0.0011 | Standard deviation 0.00048 | 1362 |
| | 6 | 2.0 | 0.00 | 0.80 | 0.48 | 37.1 | 3.2 | 43.1 | 5.4 | 3.0 | 4.1 | 1.0 | 91.8 | 0.86 | 0.73 | 3.00 | 0.65 | 2.00 | 0.87 | 0.19 | 0.0001 | 0.0008 | | 2248 |
| | 7 | 2.0 | 0.10 | 0.70 | 0.49 | 35.1 | 4.1 | 44.0 | 6.1 | 3.1 | 3.3 | 1.2 | 92.4 | 0.80 | 0.94 | 2.58 | 0.64 | 2.38 | 0.85 | 0.22 | 0.0002 | 0.0005 | | 3717 |
| Example B | 1 | 2.0 | 0.00 | 3.30 | 1.98 | 22.8 | 12.8 | 44.6 | 7.9 | 8.7 | 3.4 | 0.9 | 96.8 | 0.51 | 2.56 | 9.67 | 0.71 | 0.22 | 0.52 | 0.02 | 0.0001 | 0.0050 | | 1043 |
| | 2 | 2.0 | 0.00 | 3.30 | 1.98 | 30.4 | 4.7 | 42.1 | 10.5 | 9.5 | 2.5 | 1.3 | 97.2 | 0.72 | 3.80 | 7.31 | 0.77 | 0.24 | 0.50 | 0.02 | 0.0003 | 0.0077 | Average 0.00754 | 740 |
| | 3 | 2.0 | 0.00 | 3.30 | 1.98 | 29.7 | 5.1 | 41.4 | 9.3 | 9.9 | 3.1 | 1.0 | 95.4 | 0.72 | 3.19 | 9.90 | 0.80 | 0.25 | 0.51 | 0.02 | 0.0002 | 0.0095 | | 625 |
| | 4 | 2.0 | 0.00 | 3.30 | 1.98 | 31.8 | 4.9 | 38.4 | 10.7 | 9.0 | 3.5 | 1.1 | 94.8 | 0.83 | 2.57 | 8.18 | 0.81 | 0.20 | 0.47 | 0.02 | 0.0012 | 0.0054 | | 999 |
| | 5 | 2.0 | 0.00 | 3.30 | 1.98 | 33.0 | 4.3 | 38.2 | 10.5 | 9.1 | 3.3 | 1.2 | 95.1 | 0.86 | 2.76 | 7.58 | 0.82 | 0.21 | 0.50 | 0.01 | 0.0017 | 0.0072 | Standard deviation 0.00179 | 758 |
| | 6 | 2.0 | 0.00 | 3.30 | 1.98 | 23.9 | 14.1 | 44.7 | 4.1 | 9.2 | 2.9 | 1.0 | 96.0 | 0.53 | 3.17 | 9.20 | 0.91 | 0.19 | 0.46 | 0.02 | 0.0001 | 0.0089 | | 620 |
| | 7 | 2.0 | 0.25 | 3.00 | 1.97 | 45.8 | 7.7 | 26.2 | 6.8 | 9.5 | 2.2 | 1.1 | 96.0 | 1.75 | 4.32 | 8.64 | 0.93 | 0.20 | 0.50 | 0.13 | 0.0043 | 0.0091 | | 626 |
| Example C | 1 | 2.0 | 0.00 | 2.30 | 1.38 | 40.1 | 3.1 | 42.9 | 5.2 | 4.4 | 3.5 | 1.1 | 95.7 | 0.93 | 1.26 | 4.00 | 0.99 | 0.20 | 0.34 | 1.50 | 0.0003 | 0.0025 | | 1055 |
| | 2 | 2.0 | 0.00 | 2.30 | 1.38 | 39.9 | 4.7 | 38.2 | 7.6 | 5.2 | 1.6 | 0.7 | 95.6 | 1.04 | 3.25 | 7.43 | 1.00 | 0.24 | 0.33 | 1.46 | 0.0009 | 0.0031 | Average 0.00400 | 1006 |
| | 3 | 2.0 | 0.00 | 2.30 | 1.38 | 44.0 | 5.7 | 29.9 | 6.5 | 5.0 | 2.3 | 1.0 | 91.1 | 1.47 | 2.17 | 5.00 | 0.98 | 0.24 | 0.34 | 1.51 | 0.0012 | 0.0057 | | 526 |
| | 4 | 2.0 | 0.00 | 2.30 | 1.38 | 40.5 | 4.4 | 37.1 | 4.9 | 4.2 | 1.9 | 0.9 | 91.1 | 1.09 | 2.21 | 4.67 | 1.00 | 0.24 | 0.34 | 1.49 | 0.0007 | 0.0050 | | 504 |
| | 5 | 2.0 | 0.00 | 2.30 | 1.38 | 38.5 | 5.1 | 40.4 | 4.0 | 4.8 | 4.1 | 0.9 | 92.8 | 0.95 | 1.17 | 5.33 | 0.99 | 0.22 | 0.31 | 1.41 | 0.0010 | 0.0032 | Standard deviation 0.00119 | 899 |
| | 6 | 2.0 | 0.00 | 2.30 | 1.38 | 38.7 | 5.2 | 38.2 | 7.6 | 5.1 | 2.2 | 0.9 | 94.8 | 1.01 | 2.32 | 5.67 | 1.05 | 0.25 | 0.35 | 1.47 | 0.0008 | 0.0049 | | 624 |
| | 7 | 2.0 | 0.00 | 2.30 | 1.38 | 39.9 | 7.9 | 34.1 | 10.0 | 5.0 | 2.5 | 1.5 | 96.9 | 1.17 | 2.00 | 3.33 | 0.98 | 0.24 | 0.35 | 1.45 | 0.0009 | 0.0036 | | 833 |

[Table 2]

| | Sample No. | Amount of electrolytic iron used for melting (kg) | Amount of FeTi alloy added to molten iron (g) | Amount of TiO2 added to slag (g) | Total amount of Ti added to molten iron and slag (g) | Slag composition | | | | | | | | | | | Molten iron composition after adjustment (mass%) | | | | | | Average and Standard variation of Ti | Ti distribution (Ti)/[Ti] (-) |
|---|---|---|---|---|---|---|---|---|---|---|---|---|---|---|---|---|---|---|---|---|---|---|---|---|
| | | | | | | CaO (1) (%) | MgO (2) (%) | SiO2 (3) (%) | Al2O3 (4) (%) | TiO2 (5) (%) | MnO (%) | T.Fe (%) | Total of components (1) to (5) (%) | CaO/SiO2 (-) | TiO2/MnO (-) | TiO2/T.Fe (-) | C | Si | Mn | Cr | Al | Ti | | |
| Comparative Example D | 1 | 2.0 | 0.70 | 0.00 | 0.49 | 33.1 | 5.5 | 46.4 | 5.7 | 1.6 | 2.8 | 1.1 | 92.3 | 0.71 | 0.57 | 1.45 | 0.57 | 1.42 | 0.75 | 0.17 | 0.0005 | 0.0002 | | 4796 |
| | 2 | 2.0 | 0.70 | 0.00 | 0.49 | 34.3 | 5.4 | 47.2 | 6.2 | 2.1 | 2.1 | 0.9 | 95.2 | 0.73 | 1.00 | 2.33 | 0.60 | 1.44 | 0.80 | 0.16 | 0.0006 | 0.0003 | Average | 4196 |
| | 3 | 2.0 | 0.70 | 0.00 | 0.49 | 35.2 | 6.2 | 44.3 | 5.9 | 2.2 | 3.0 | 1.2 | 93.8 | 0.79 | 0.73 | 1.83 | 0.64 | 1.50 | 0.91 | 0.21 | 0.0004 | 0.0003 | 0.00113 | 4396 |
| | 4 | 2.0 | 0.70 | 0.00 | 0.49 | 36.0 | 3.8 | 43.2 | 7.0 | 1.1 | 3.2 | 2.1 | 91.1 | 0.83 | 0.34 | 0.52 | 0.63 | 1.97 | 0.92 | 0.22 | 0.0007 | 0.0042 | | 157 |
| | 5 | 2.0 | 0.70 | 0.00 | 0.49 | 36.9 | 4.1 | 44.1 | 7.8 | 2.4 | 2.9 | 1.1 | 95.3 | 0.84 | 0.83 | 2.18 | 0.68 | 2.22 | 0.85 | 0.19 | 0.0006 | 0.0003 | Standard | 4796 |
| | 6 | 2.0 | 0.70 | 0.00 | 0.49 | 36.7 | 4.1 | 43.2 | 6.5 | 1.5 | 1.6 | 0.9 | 92.0 | 0.85 | 0.94 | 1.67 | 0.64 | 2.31 | 0.84 | 0.18 | 0.0001 | 0.0011 | deviation | 817 |
| | 7 | 2.0 | 0.70 | 0.00 | 0.49 | 36.1 | 4.6 | 44.1 | 5.5 | 1.7 | 3.0 | 1.4 | 92.0 | 0.82 | 0.57 | 1.21 | 0.64 | 2.04 | 0.84 | 0.21 | 0.0002 | 0.0015 | 0.00144 | 679 |
| Comparative Example E | 1 | 2.0 | 2.80 | 0.00 | 1.96 | 22.8 | 12.8 | 44.6 | 7.9 | 6.0 | 1.1 | 0.8 | 94.1 | 0.51 | 5.45 | 7.50 | 0.73 | 0.24 | 0.62 | 0.01 | 0.0001 | 0.0069 | Average | 521 |
| | 2 | 2.0 | 2.80 | 0.00 | 1.96 | 30.4 | 4.7 | 42.1 | 10.5 | 7.1 | 1.4 | 0.9 | 94.8 | 0.72 | 5.07 | 7.89 | 0.77 | 0.23 | 0.59 | 0.02 | 0.0001 | 0.0083 | 0.00690 | 513 |
| | 3 | 2.0 | 2.80 | 0.00 | 1.96 | 29.7 | 5.1 | 41.9 | 9.3 | 8.1 | 1.4 | 1.2 | 94.1 | 0.71 | 5.79 | 6.75 | 0.81 | 0.24 | 0.57 | 0.01 | 0.0002 | 0.0121 | | 401 |
| | 4 | 2.0 | 2.80 | 0.00 | 1.96 | 31.8 | 4.9 | 38.4 | 10.7 | 9.1 | 1.2 | 0.4 | 94.9 | 0.83 | 7.58 | 22.75 | 0.81 | 0.25 | 0.51 | 0.02 | 0.0002 | 0.0010 | Standard | 5455 |
| | 5 | 2.0 | 2.80 | 0.00 | 1.96 | 33.0 | 4.3 | 38.2 | 10.5 | 9.0 | 1.5 | 0.3 | 95.0 | 0.86 | 6.00 | 30.00 | 0.84 | 0.20 | 0.49 | 0.01 | 0.0016 | 0.0007 | deviation | 7708 |
| | 6 | 2.0 | 2.80 | 0.00 | 1.96 | 23.9 | 14.1 | 44.7 | 4.1 | 7.4 | 4.4 | 1.5 | 94.2 | 0.53 | 1.68 | 4.93 | 0.92 | 0.20 | 0.46 | 0.10 | 0.0020 | 0.0092 | 0.00443 | 482 |
| | 7 | 2.0 | 2.80 | 0.00 | 1.96 | 45.8 | 7.7 | 26.2 | 6.8 | 8.2 | 3.1 | 1.4 | 94.7 | 1.75 | 2.65 | 5.86 | 0.92 | 0.20 | 0.49 | 0.13 | 0.0040 | 0.0101 | | 487 |
| Comparative Example F | 1 | 2.0 | 2.00 | 0.00 | 1.40 | 40.1 | 13.1 | 42.9 | 5.2 | 6.4 | 1.1 | 0.4 | 97.7 | 0.93 | 5.82 | 16.00 | 1.01 | 0.19 | 0.33 | 1.51 | 0.0005 | 0.0002 | | 19184 |
| | 2 | 2.0 | 2.00 | 0.00 | 1.40 | 39.9 | 4.7 | 38.2 | 7.6 | 7.0 | 0.9 | 0.4 | 97.4 | 1.04 | 7.78 | 17.50 | 1.03 | 0.25 | 0.33 | 1.49 | 0.0004 | 0.0002 | | 20982 |
| | 3 | 2.0 | 2.00 | 0.00 | 1.40 | 44.0 | 5.7 | 29.9 | 6.5 | 6.0 | 2.3 | 1.0 | 92.1 | 1.47 | 2.61 | 6.00 | 0.99 | 0.25 | 0.35 | 1.49 | 0.0009 | 0.0076 | 0.00433 | 473 |
| | 4 | 2.0 | 2.00 | 0.00 | 1.40 | 40.5 | 4.4 | 37.1 | 4.9 | 6.1 | 1.9 | 0.9 | 93.0 | 1.09 | 3.21 | 6.78 | 1.00 | 0.24 | 0.37 | 1.50 | 0.0011 | 0.0061 | | 599 |
| | 5 | 2.0 | 2.00 | 0.00 | 1.40 | 38.5 | 5.1 | 40.4 | 4.0 | 6.7 | 3.1 | 0.9 | 94.7 | 0.95 | 2.16 | 7.44 | 1.04 | 0.18 | 0.31 | 1.48 | 0.0020 | 0.0021 | Standard | 1913 |
| | 6 | 2.0 | 2.00 | 0.00 | 1.40 | 38.7 | 5.2 | 38.2 | 7.6 | 5.1 | 2.1 | 1.0 | 94.8 | 1.01 | 2.43 | 5.10 | 1.02 | 0.19 | 0.32 | 1.46 | 0.0015 | 0.0102 | deviation | 300 |
| | 7 | 2.0 | 2.00 | 0.00 | 1.40 | 39.9 | 7.9 | 34.1 | 10.0 | 5.0 | 2.5 | 1.5 | 96.9 | 1.17 | 2.00 | 3.33 | 0.99 | 0.19 | 0.32 | 1.50 | 0.0005 | 0.0039 | 0.00382 | 769 |

Implementation conditions for Examples and Comparative Examples will be described below.

In each of Examples and Comparative Examples, 2 kg of electrolytic iron.was melted in an alumina crucible by using an induction melting furnace. Note that the electrolytic iron in use was a commercially available one. Furthermore, its purity does not matter. Although material for the crucible in use was alumina ($Al_2O_3$), any material that can withstand the erosion of the molten steel (molten iron) or slag at a temperature of 1, 550°C or higher may be used for the crucible. For example, magnesia (MgO) may be used. Note that to prevent oxidization of the molten iron, the electrolytic iron was melted under an Ar airflow.

The molten steel temperature was kept in a range of 1,550 to 1, 570°C by adjusting an output of the induction melting furnace after melting raw materials. In adjustment of the components, predetermined amounts of carbon particles, silicon wafer scraps, electrolytic manganese, and an Fe-Cr-C alloy were added to the molten iron, thereby adjusting [C], [Si], [Mn], and [Cr] in the molten iron at predetermined concentrations. In Comparative Example, an Fe-Ti alloy in which a Ti content was 70% was added to the molten iron to adjust the Ti concentration in the molten iron. As long as a concentration of a target element is previously known, any kind of additive for adjusting the components can be used. For example, an Fe-Si alloy, an Fe-Mn alloy, an Fe-Si-Mn alloy, or the like may be combined.

The components of the molten iron were as follows: C = 0.5 to 1.1%; Si = 0.14 to 2.3%; Mn = 0.16 to 0.92%; Cr = 0 to 1.6%; and Al = 0.0001 to 0.005%.

After adjusting the components of the molten iron, 40 g of a flux having a predetermined composition was added to the molten iron.

To prepare the flux with the predetermined composition, a commercially available oxide reagent or carbonate reagent ($SiO_2$, $CaCO_3$, MgO, $Al_2O_3$, $MnO_2$, $TiO_2$) was previously mixed together, which was burned at 1,500°C for 8 hours.

After adding the flux, the molten iron with the flux were held at a predetermined temperature for 60 minutes, followed by turning off the induction melting furnace to thereby solidify the molten iron and the slag in the crucible. Thereafter, predetermined amounts of samples were cut out of the molten irons and slags, and their respective components of the samples were analyzed.

Regarding Examples and Comparative Examples, Examples A, B, and C are examples in which $TiO_2$ was added as the flux, while Comparative Examples D, E, and F are examples in which $TiO_2$ was not added at all. Example A-Sample 7 and Example B-Sample '7 were examples in which both $TiO_2$ and Ti alloy were added.

Example A and Comparative Example D handled a group of silicon strongly-deoxidized steels in which the target [Ti] concentration in the molten iron was 0.001%. In each of Example A and Comparative Example D, the total pure Ti content added as FeTi or $TiO_2$ was 0.48 to 0.49 g.

Example B and Comparative Example E handled a group of silicon weakly-deoxidized steels in which the target [Ti] concentration in the molten iron was 0.007%. In each of Example B and Comparative Example E, the total pure Ti content added as FeTi or $TiO_2$ was 1.96 to 1.98 g. Furthermore, Example C and Comparative Example F handled a group of Cr-added silicon weakly-deoxidized steels in which a target [Ti] concentration in a molten iron was 0.004%.

In Example C and Comparative Example F, the total pure Ti content added as FeTi or $TiO_2$ was 1.38 to 1.40 g. Note that the silicon strongly-deoxidized steels, silicon weakly-deoxidized steels, and Cr-added silicon weakly-deoxidized steels are silicon-deoxidized steels. The definitions of the terms "Si strongly-deoxidized steel" and "Si weakly-deoxidized steel" are not distinguished by their [Si] concentrations, but these terms are used for relative comparison between the steel groups for convenience.

Examples and Comparative Examples were compared and evaluated in terms of variations in the after adjusted [Ti] concentration in the molten iron of the same kind of steel group mentioned above, i.e., by the standard deviation.

In each of Examples (Example A, Example B, and Example C), the slag composition satisfied the following conditions: $CaO/SiO_2$ = 5 to 1.8; $Al_2O_3$ = 4 to 20%; and MgO ≤ 15% (excluding 0%), and the oxide containing $TiO_2$ was added, resulting in $TiO_2$ = 1.5 to 10%. Furthermore, the slag satisfied the following conditions: CaO + $SiO_2$ + $Al_2O_3$ + MgO + $TiO_2$ ≥ 90%; $0.4 \leq TiO_2/MnO \leq 5$; and $1 \leq TiO_2/T.Fe \leq 10$.

On the other hand, in any of Comparative Examples (Comparative Example D, Comparative Example E, and Comparative Example F), no oxide containing $TiO_2$ was added (i.e. , the amount of $TiO_2$ added to the slag was zero).

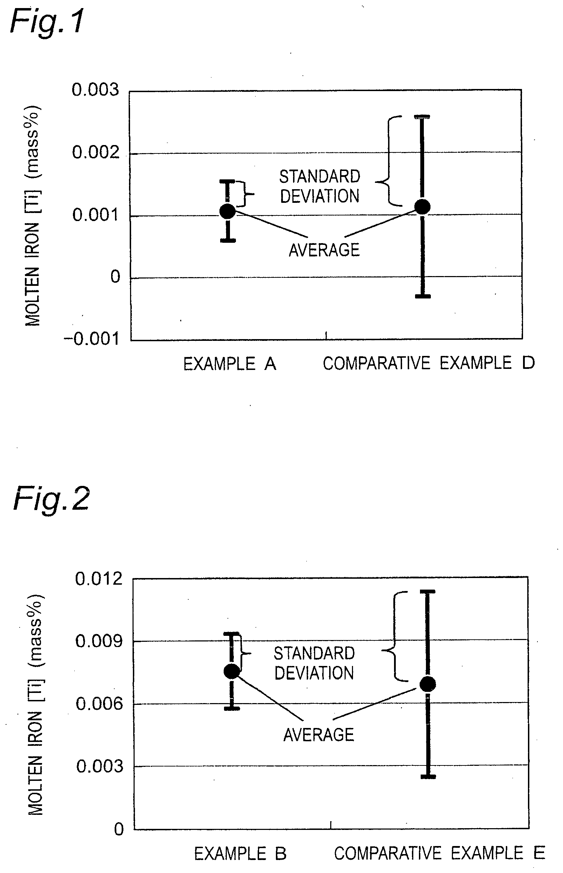

Figs. 1 to 3 are diagrams collectively showing Examples and Comparative Examples.

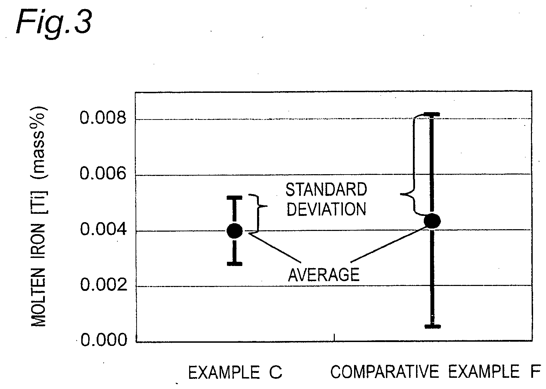

Fig. 1 shows [Ti] concentrations of molten irons in Example A and Comparative Example D; Fig. 2 shows [Ti] concentrations of molten irons in Example B and Comparative Example E; and Fig. 3 shows [Ti] concentrations of molten irons in Example C and Comparative Example F.

As shown in Fig. 1, when comparing Example A with Comparative Example D, the average [Ti] concentrations in the molten irons were substantially the same. However, in Comparative Example D, the standard deviation was 0.00144, while in Example A, the standard deviation could be a small value, i.e., 0.00048. As shown in Fig. 2, when comparing Example B with Comparative Example E, the average [Ti] concentrations in the molten irons were substantially the same. However, in Comparative Example D, the standard deviation was 0.00443, while in Example B, the standard deviation could be a small value, i.e., 0.00179. As shown in Fig. 3, when comparing Example C with Comparative Example F, the average [Ti] concentrations in the molten irons were substantially the same. However, in Comparative Example F, the standard deviation was 0.00382, while in Example C, the standard deviation could be a small value, i.e., 0.00119.

In other words, by the method for controlling the Ti concentration in the steel according to the present invention, the steels had a Ti concentration in a range of 0.0005% to 0.01%. Such steels in Examples could reduce variations in the Ti concentration to approximately 1/3 to 2/5 of those in Comparative Examples.

In the embodiments disclosed herein, matters not clearly mentioned, including operating conditions, various parameters, and the dimension, weight, and volume of components, adopt the matters that could be easily conceived by a person skilled in the art without departing from the scope of implementation by the person skilled in the art.

The present application claims priority to Japanese Patent Application No. 2014-168472 filed on August 21, 2014, the disclosure of which is incorporated herein by reference in its entirety.

**Claims**

1. A method for controlling a Ti concentration in a steel when manufacturing a silicon-deoxidized steel comprising 0.1 to 3% by mass of Si and 0.0001 to 0.005% by mass of Al by ladle refining of a molten steel, the method comprising the step of:

   adding an oxide including $TiO_2$ to a slag in a ladle during the ladle refining,
   wherein the slag produced at end of the ladle refining satisfies formulas (1) to (7) below:

$$0.5 \leq CaO/SiO_2 \leq 1.8 \qquad (1)$$

$$4\% \text{ by mass} \leq Al_2O_3 \leq 20\% \text{ by mass} \qquad (2)$$

$$MgO \leq 15\% \text{ by mass} \quad (3)$$

$$1.5\% \text{ by mass} \leq TiO_2 \leq 10\% \text{ by mass} \qquad (4)$$

$$CaO + SiO_2 + Al_2O_3 + MgO + TiO_2 \geq 90\% \text{ by mass} \qquad (5)$$

$$0.4 \leq TiO_2/MnO \leq 5 \qquad (6)$$

$$1 \leq TiO_2/T.Fe \leq 10 \qquad (7)$$

   where a compound represented by a chemical formula represents the content of the compound in percent by mass; and T.Fe represents the total concentration, in mass ratio, of Fe contained in Fe oxides in the slag.

2. A method for manufacturing a silicon-deoxidized steel comprising 0.1 to 3% by mass of Si and 0.0001 to 0.005% by mass of Al by ladle refining of a molten steel, wherein a Ti concentration in the steel is controlled by the method for controlling a Ti concentration in a steel according to claim 1.

*Fig.1*

*Fig.2*

*Fig.3*

## INTERNATIONAL SEARCH REPORT

International application No.

PCT/JP2015/073013

| A. CLASSIFICATION OF SUBJECT MATTER |
| --- |
| *C21C7/00*(2006.01)i, *C21C7/06*(2006.01)i |

According to International Patent Classification (IPC) or to both national classification and IPC

| B. FIELDS SEARCHED |
| --- |

Minimum documentation searched (classification system followed by classification symbols)
C21C7/00, C21C7/06

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2008-150683 A  (Kobe Steel, Ltd.), 03 July 2008 (03.07.2008), (Family: none) | 1-2 |
| A | JP 2005-272888 A  (Kobe Steel, Ltd.), 06 October 2005 (06.10.2005), (Family: none) | 1-2 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 26 August 2015 (26.08.15) | 08 September 2015 (08.09.15) |

| Name and mailing address of the ISA/<br>Japan Patent Office<br>3-4-3,Kasumigaseki,Chiyoda-ku,<br>Tokyo 100-8915,Japan | Authorized officer |
| --- | --- |
| | Telephone No. |

Form PCT/ISA/210 (second sheet) (July 2009)

**REFERENCES CITED IN THE DESCRIPTION**

**Patent documents cited in the description**

- JP 2014037598 A
- JP 2013224480 A
- JP 2010007092 A
- JP 2010202905 A
- JP 2002194497 A
- JP 2002167647 A
- JP 2014168472 A